# EUROPÄISCHE PATENTSCHRIFT

(11) **EP 2 279 851 B1**
(45) Veröffentlichungstag und Bekanntmachung des Hinweises auf die Patenterteilung: **04.10.2017**
(21) Anmeldenummer: 10006850.1
(22) Anmeldetag: 02.07.2010
(51) Int. Cl.: B29C 49/48, B29C 49/42, B29C 33/30, B29C 33/04

(54) **Vorrichtung und Verfahren zum Blasformen von Kunststoffbehältern**
Device and method for blow moulding plastic containers
Procédé et dispositif destinés au moulage par soufflage de récipients en matière synthétique

(30) Priorität: 31.07.2009 DE 102009026298
(43) Veröffentlichungstag der Anmeldung: 02.02.2011
(73) Patentinhaber: Krones AG, 93073 Neutraubling (DE)
(72) Erfinder: Stoiber, Christian, 93073 Neutraubling (DE); Philipp, Thomas, 93073 Neutraubling (DE)
(74) Vertreter: Benninger, Johannes

(56) Entgegenhaltungen:
- EP-A2- 1 288 557
- WO-A1-2008/009808
- DE-U1- 20 305 015
- US-A- 3 473 192
- US-A- 3 764 250
- US-A- 5 562 935
- US-E- R E27 469

## Beschreibung

Die Erfindung betrifft eine Vorrichtung zum Blasformen von Kunststoffbehältern mit den Merkmalen des Oberbegriffs des unabhängigen Anspruchs 1. Die Erfindung betrifft weiterhin ein entsprechendes Verfahren zum Blasformen von Kunststoffbehältern mit den Merkmalen des Oberbegriffs des unabhängigen Verfahrensanspruchs 8. Bei der Herstellung von Kunststoffbehältern zur Getränkeabfüllung werden Vorformlinge mittels Blasform- bzw. Streckblasvorrichtungen unter Temperatureinwirkung umgeformt. Die Blasumformung erfolgt in geeigneten Blasformen, die mehrteilig sind und üblicherweise aus zwei gegeneinander verschwenkbaren Formhälften und einem gegen die geschlossenen Formhälften verschiebbaren Bodenteil gebildet sind. Die Temperierung während des eigentlichen Blas- bzw. Streckblasvorganges erfolgt über ein Kühlfluid, das durch Kanäle in den Blasformteilen geleitet wird. Der wenigstens eine Kühlkanal kann sich je nach Bedarf auf einen bestimmten Bereich beschränken oder sich über die gesamte Höhe der Blasform erstrecken. Der Kühlkanal weist in der Regel einen außen an der Blasform angeordneten Anschluss auf, der über geeignete Kupplungseinrichtungen mit einer Kühlleitung verbunden werden kann.

Soll eine andere Behälterform hergestellt werden, müssen die Formteile ausgewechselt werden. Bei einem solchen Wechsel der Blasformen müssen die Kupplungseinrichtungen für die Kühlkanäle getrennt und nach dem Einsetzen der neuen Formen wieder geschlossen werden. Nach dem Trennvorgang befinden sich die Anschlussleitungen meist in einem nicht fixierten Zustand und können sich daher weitgehend frei bewegen, was einerseits zu ungewollten Beschädigungen der Leitungen und/oder deren Anschlüsse als auch zu Verwechslungen der Anschlüsse und damit zu einer Fehlfunktion der Kühlung beim Blasformen führen kann.

Die WO 2008/009808 A1 beschreibt ein System zur Behälterherstellung mittels eines Blasformprozesses. Eine Blasform weist eine Fluidkühlung und Kühlkanäle mit einem Einlass- und Auslassstutzen auf, die über ein lösbares Kupplungssystem mit Versorgungsleitungen verbunden werden können. Die Versorgungsleitungen sind hierbei über das modulare Kupplungssystem zusammengefasst, sind jedoch nach der Trennung der Leitungen von der Blasform weiterhin nicht räumlich fixiert.

Die DE 203 18 583 U1 offenbart weiterhin eine Steckverbindung zur Übertragung von elektrischen Strömen und Fluiden, etwa für Gabelstapler. Auch bei Verwendung einer solchen steckbaren Fluidverbindung ist keine räumliche Fixierung des Steckers im gelösten Zustand gegeben.

Durch US 3,764,250, die den Oberbegriff der Ansprüche 1 und 8 offenbart, ist ein Extruder mit einem Blasformrad bekannt, an dem mehrere, jeweils aus zwei mit Kühlmittelkanälen versehenen Blasformhälften bestehende Blasformen angeordnet sind.

Durch WO 2008/009808 A1 ist eine Blasform bekannt, die aus zwei mit Kühlmittelkanälen versehenen Blasformhälften besteht. Eine lösbare Steckverbindung umfassend ein mit den Kühlmittelein- und -auslässen verbindbares Steckerteil ist je an den Blasformhälften angeordnete Kühlmittelein- und -auslässe vorgesehen. Die Blasform kann dreiteilig sein. Ein Anschluss einer zentralen Kühlfluidversorgung an das Steckerteil ist durch biegbare Rohre hergestellt. Ein Schalter am Steckerteil dient der Lösung der Verbindung zwischen Steckerteil und Blasformhälften. Mit dem Schalter zusammenwirkende Vorsprünge und Ausnehmungen verhindern eine falsche Anschlusszuordnung.

Durch US 3,473,192 ist eine aus zwei mit Kühlmittelkanälen versehenen Blasformhälften bestehende Blasform bekannt. Die Kühlmittelkanäle werden mittels Schläuchen und Schlauchschellen verbunden.

Durch US 5,562,935 ist eine Schnellwechselvorrichtung für mit Kühlmittelkanälen versehene Blasformteile bekannt.

US Re. 27,469 offenbart eine Blasform mit Kühlmittelkanälen, die mittels per Schlauchschellen befestigter Schläuche mit einer Kühlfluidversorgung verbunden sind. Wie bei Schlauchschellen üblich sind diese manuell lösbar.

EP 1 288 557 A2 offenbart einen Extruder mit einem Blasformrad, an dem mehrere, jeweils aus zwei mit Kühlmittelkanälen versehenen Blasformhälften bestehende Blasformen angeordnet sind.

Durch DE 20 305 015 U1 ist eine Blasmaschine bekannt, deren Kühlmittelkanäle Rückflussverhinderer aufweisen.

Ein Ziel der vorliegenden Erfindung besteht darin, eine Vorrichtung zum Blasformen von Behältern zu liefern, die auswechselbare Blasformteile mit einfach anschließbaren und trennbaren Fluidverbindungsanschlüssen aufweist, die jederzeit vor Beschädigungen und/oder falscher Anschlusszuordnung geschützt sind. Ein weiteres Ziel der Erfindung besteht darin, ein in entsprechender Weise verbessertes Verfahren zum Auswechseln von Blasformteilen einer Blasformvorrichtung zu liefern.

Diese Ziele der Erfindung werden mit den Gegenständen der unabhängigen Ansprüche erreicht. Merkmale vorteilhafter Weiterbildungen der Erfindung ergeben sich aus den abhängigen Ansprüchen.

Die vorliegende Erfindung umfasst eine Vorrichtung zum Blasformen von Kunststoffbehältern mit einer öffenbaren und verschließbaren Blasform zur Umformung von temperierten Vorformlingen aus Kunststoff unter Einbringung eines Blasinnendrucks zu Kunststoffbehältern. Die Blasform weist mindestens zwei auswechselbar an einem Blasformträger angeordnete, schalenartige Blasformteile mit jeweils darin verlaufenden Kühlfluidkanälen zur Führung von Kühlfluid und zur Temperierung der Blasform während und/oder nach erfolgtem Blasumformen des Kunststoffbehälters auf. Die Kühlfluidkanäle in der Blasform sind an eine zentrale Kühlfluidversorgung der Blasformvorrichtung angeschlossen. Zwischen der zentralen Kühlfluidversorgung und den in den Blasformteilen angeordneten Kühlfluidkanälen ist gemäß der vorliegenden Erfindung ein dem Blasformträger zugeordnetes Kupplungsmodul vorgesehen. Dieses Kupplungsmodul ist räumlich und/oder baulich dem Blasformträger zugeordnet, so dass insbesondere im getrennten Zustand der Kanäle, bspw. bei entnommenen Blasformteilen, keine losen Leitungen vorliegen, die beim Einsetzen neuer Blasformen eingeklemmt oder anderweitig beschädigt werden könnten und/oder die nach dem Einsetzen der neuen Blasformen fehlerhaft angeschlossen werden könnten. Diese Fehlfunktionen werden zuverlässig verhindert, da das Kupplungsmodul in definierter Lage am Blasformträger fixiert ist.

Das Kupplungsmodul kann insbesondere manuell betätigbare Trenneinrichtungen für die Kühlfluidleitungen aufweisen. Vorzugsweise ist das Kupplungsmodul fest am Blasformträger montiert und stellt lösbare Leitungsverbindungen zu den jeweiligen Blasformteilen her. Wahlweise können die Trenneinrichtungen auch gesteuert werden, bspw. über elektromagnetisch oder anderweitig motorisch aktivierbare Aktoren, so dass bspw. eine ferngesteuerte und/oder automatisierte Koppelung und Trennung der Fluidverbindungen erfolgen kann.

Gemäß einer bevorzugten Ausführungsvariante ist jedem einzelnen Blasformteil jeweils ein separates Kupplungsmodul zugeordnet. Die Blasform kann mindestens zwei Blasformhälften und ein Bodenteil umfassen, wobei jedem dieser mindestens drei Blasformteile ein separates Kupplungsmodul zugeordnet ist.

Weiterhin kann jedes der Kupplungsmodule über manuell betätigbare Betätigungselemente, bspw. über Schieber, Betätigungshebel, Druckknöpfe o. dgl., zur Zuführung und/oder Trennung der Kühlfluidleitungen vom jeweiligen Blasformteil verfügen. Dabei kann jeder Schieber bzw. jedes Betätigungselement eines der Kupplungsmodule jeweils mit zwei oder mehr parallelen Leitungsanschlüssen zusammenwirken. Eine Variante der erfindungsgemäßen Vorrichtung sieht steuerbare Betätigungselemente zur Zuführung und/oder Trennung der Kühlfluidleitungen vom jeweiligen Blasformteil vor, so dass bspw. eine automatisierbare Koppelung und Trennung ermöglicht ist.

Die Erfindung umfasst weiterhin ein Verfahren zum Auswechseln von Blasformteilen einer öffenbaren und verschließbaren Blasform zum Herstellen von Kunststoffbehältern durch Umformung von temperierten Vorformlingen aus Kunststoff unter Einbringung eines Blasinnendrucks zu Kunststoffbehältern, wobei die Blasform mindestens zwei auswechselbar an einem Blasformträger angeordnete, schalenartige Blasformteile mit jeweils darin verlaufenden Kühlfluidkanälen zur Führung von Kühlfluid und zur Temperierung der Blasform während und/oder nach erfolgtem Blasumformen des Kunststoffbehälters aufweist, wobei die Kühlfluidkanäle in der Blasform an eine zentrale Kühlfluidversorgung der Blasformvorrichtung angeschlossen sind, dadurch gekennzeichnet, dass beim Trennen der Blasformteile vom Blasformträger und beim Auswechseln der Blasformteile eine zwischen der zentralen Kühlfluidversorgung und den in den Blasformteilen angeordneten Kühlfluidkanälen befindliche Leitungsverbindung mittels Betätigung eines dem Blasformträger zugeordneten Kupplungsmoduls trennbar und/oder verbindbar ist.

Zusammenfassend kann die Erfindung wie folgt charakterisiert werden. So basiert die Erfindung auf einer fest fixierten Kupplungskassette mit beweglichen Elementen. Gemäß einer Ausführungsvariante befinden sich die Kassetten für die Neckringkühlung im oberen Teil des Formträgers und für die Temperierung des Bodens im unteren Bereich der Bodeneinheit. Die Kassetten beinhalteten jeweils zwei voneinander getrennte, jeweils verschiebbare und fest eingebundene Elemente. Die Elemente erfahren über die Kassette eine Rastposition und können mittels eines Betätigungselements wie bspw. eines Druckknopfes o. dgl. wieder freigegeben werden. An den Enden der Elemente befindet sich auf einer Seite ein Kupplungselement, welches an ein entsprechendes Gegenelement herangeführt werden kann. Das gegenüber liegende Ende wird an die Versorgungsleitung für das Kühlfluid angebunden. Zudem weisen die Elemente einen um 90° zur Verschieberichtung angeordneten Bolzen auf, welcher als Betätigungsmittel zum Schieben verwendet wird. Werden die verschiebbaren Elemente, die einer mechanischen Vorspannung unterliegen (z.B. mittels Druckfeder vorgespannt), in die Rastposition gebracht, erfolgt ein Verbinden und der Kühlmittelkreislauf ist dadurch geschlossen. Ein Trennen der Verbindung wird durch die Freigabe der Rastposition durch Drücken des Druckknopfes erreicht. Die Elemente werden durch die Vorspannung der Druckfeder automatisch in eine geöffnete Position geschoben, und der Kühlmittelkreislauf dadurch unterbrochen. Die Betätigung, d.h. das Verbinden und Trennen der Kühlfluidverbindungen, wird durch sehr kurze Verschiebewege realisiert und ist dadurch zeitlich optimiert. Die Handhabung ist gegenüber bekannten Fluidverbindungen wesentlich verbessert. Zudem ist ein falsches Verbinden bzw. ein Vertauschen der Versorgungsleitungen nahezu ausgeschlossen.

Zusätzliche Varianten können darüber hinaus vorsehen, dass die Fluidkupplungen elektrische Kontaktverbindungen aufweisen, bspw. zur Signalübertragung von Sensorsignalen. So können bspw. in den Blasformteilen Temperatursensoren integriert sein, so dass mit Hilfe der gelieferten Temperatursignale eine verbesserte Temperierung und/oder eine Temperatursteuerung in Echtzeit ermöglicht sind.

Weitere Merkmale, Ziele und Vorteile der vorliegenden Offenbarung gehen aus der nun folgenden detaillierten Beschreibung einer bevorzugten Ausführungsform der Offenbarung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt eine schematische Perspektivdarstellung einer Bodeneinheit einer Vorrichtung zum Blasformen von Kunststoffbehältern mit angeschlossenen Fluidverbindungen zur Kühlfluidversorgung der Bodenform.
Fig. 2 zeigt die Bodeneinheit gemäß Fig. 1 mit getrennten Fluidverbindungen.
Fig. 3 zeigt eine schematische Perspektivdarstellung eines geschlossenen Blasformträgers mit darin befindlichen Blasformen und mit angeschlossenen Fluidverbindungen zur Kühlfluidversorgung der Blasformteile.
Fig. 4 zeigt den Blasformträger gemäß Fig. 3 mit getrennten Fluidverbindungen.
Anhand der schematischen Darstellungen der Figuren 1 bis 4 wird die Funktionsweise einer offenbaren Vorrichtung zum Blasformen von Getränkebehältern bzw.

Flaschen aus Kunststoff sowie die Verfahrensschritte beim Austauschen einzelner Blasformen näher erläutert.

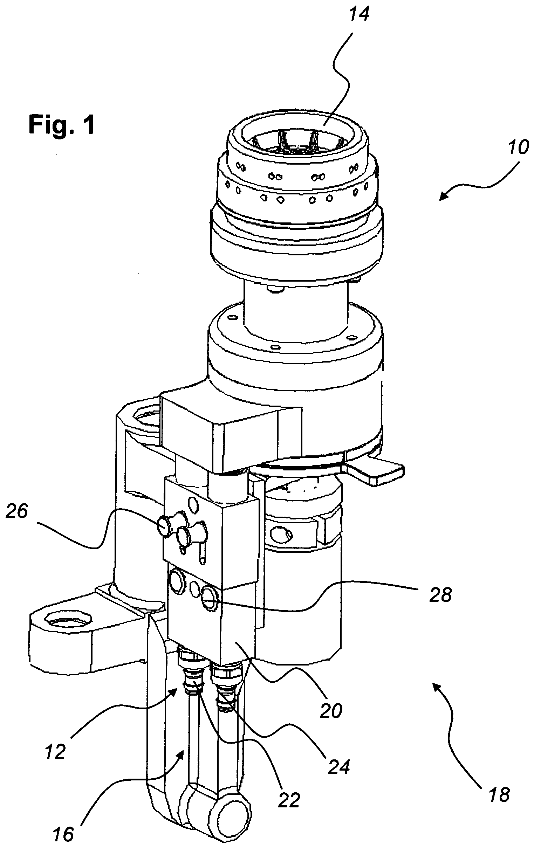

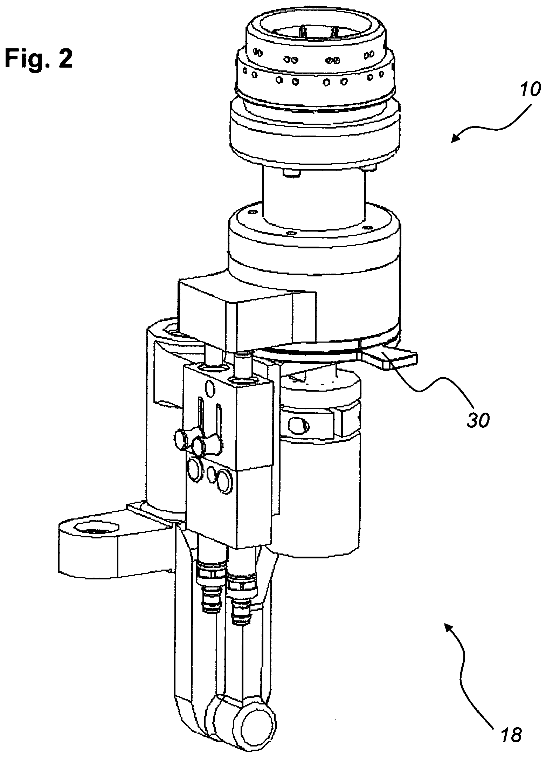

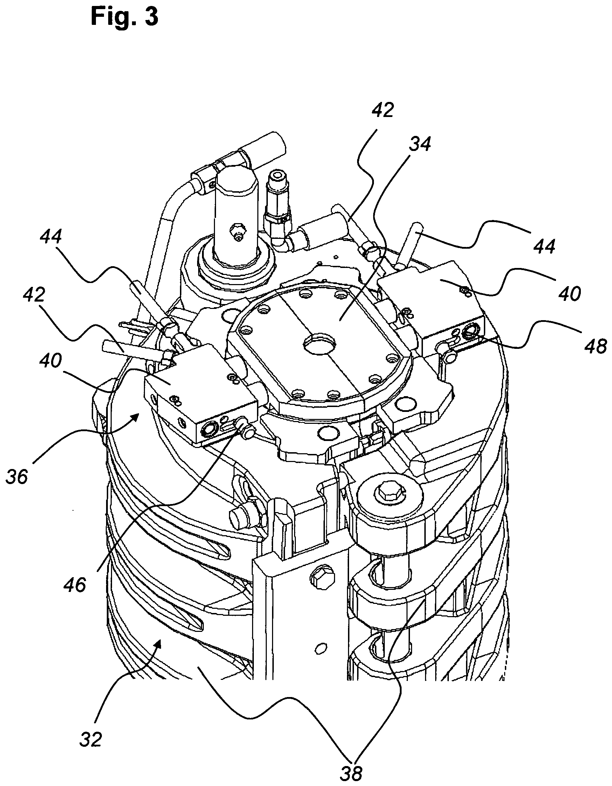

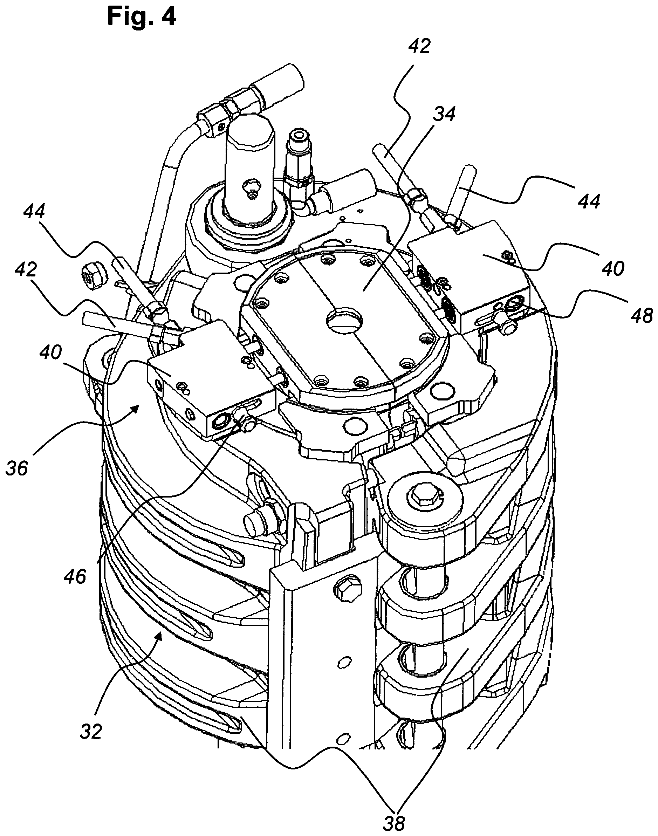

So zeigen die schematischen Perspektivdarstellungen der Figuren 1 und 2 eine Bodeneinheit 10 einer hier nicht komplett dargestellten Vorrichtung zum Blasformen von Kunststoffbehältern. Die Figuren 3 und 4 zeigen die seitlich öffenbaren Halbschalen der Blasformen, an deren unterer Stirnseite die Bodenform 14 der Bodeneinheit 10 angedrückt wird. Während bei der Darstellung gemäß Fig. 1 Fluidverbindungen 12 zur Kühlfluidversorgung einer Bodenform 14 angeschlossen sind, sind sie in der Darstellung der Fig. 2 getrennt. Die Bodenform 14 weist integrierte Fluidkanäle (hier nicht erkennbar) auf, die zur Temperierung der Bodenform 14 während des Blasform- bzw. Streckblasvorgangs von Kunststoffbehältern dienen. Die Kühlfluidkanäle in der Bodenform 14 sind an eine zentrale Kühlfluidversorgung 16 der Blasformvorrichtung angeschlossen.

Zwischen der zentralen Kühlfluidversorgung 16 und den in der Bodenform 14 angeordneten Kühlfluidkanälen ist ein am Bodeneinheitträger 18 angebrachtes Kupplungsmodul 20 vorgesehen. Im Kupplungsmodul 20 sind zwei Kühlfluidleitungen 22 und 24 als Zulauf und Rücklauf geführt, die über manuell betätigbare Schieber 26 separat verriegelt oder mittels der unterhalb der Schieber 26 angebrachten Druckknöpfe 28 entriegelt und getrennt werden können (vgl. Fig. 2).

Im entriegelten und getrennten Zustand der Fluidverbindungen 12 gemäß Fig. 2 kann die gesamte, modular aufgebaute Bodeneinheit 10 durch Verdrehen des Ver-/Entriegelungshebels 30 vom Bodeneinheitträger 18 abgenommen und durch eine andere Bodeneinheit 10 ausgetauscht werden. Das Kupplungsmodul 20 mit den daran befestigten Fluidverbindungen 12 bleibt dabei fest am Bodeneinheitträger 18 verankert. Die schematischen Perspektivdarstellungen der Figuren 3 und 4 zeigen einen Blasformträger 32 mit darin befindlichen Blasformteilen 34 und mit angeschlossenen (Fig. 3) bzw. getrennten (Fig. 4) Fluidverbindungen 36 zur Kühlfluidversorgung der Blasformteile 34. Der Blasformträger 32 weist zwei Formträgerhälften 38 auf, die in den gezeigten Darstellungen mit darin befindlichen Blasformteilen 34 verriegelt sind und vorbereitet sind zum Herstellen der blasgeformten Behälter (nicht dargestellt). Jedem der beiden Blasformteile 34 ist ein separates Kupplungsmodul 40 zugeordnet, das jeweils an der entsprechenden Formträgerhälfte 38 angeordnet und befestigt ist. In den Kupplungsmodulen 40 sind wiederum jeweils zwei Kühlfluidleitungen 42 und 44 als Zulauf und Rücklauf geführt, die über einen manuell betätigbaren Schieber 46 gemeinsam verriegelt oder mittels des neben dem Schieber 46 angebrachten Druckknopfes 48 entriegelt und getrennt werden können (vgl. Fig. 4). Im entriegelten und getrennten Zustand der Fluidverbindungen gemäß Fig. 4 können die modular aufgebauten Blasformteile 34 aus den Formträgerhälften 38 entnommen und durch eine andere Blasformteile 34 ausgetauscht werden, sobald die Formträgerhälften 38 des Blasformträgers 32 durch Verschwenken geöffnet wurde. Das Kupplungsmodul 40 mit den daran befestigten Fluidverbindungen 36 bleibt dabei fest an der Oberseite der jeweiligen Formträgerhälfte 38 verankert.

### Bezugszeichenliste

- 10: Bodeneinheit
- 12: Fluidverbindung
- 14: Bodenform
- 16: Kühlfluidversorgung
- 18: Bodeneinheitträger
- 20: Kupplungsmodul
- 22: Kühlfluidleitung
- 24: Kühlfluidleitung
- 26: Schieber
- 28: Druckknopf
- 30: Ver-/Entriegelungshebel
- 32: Blasformträger
- 34: Blasformteil
- 36: Fluidverbindung
- 38: Formträgerhälfte
- 40: Kupplungsmodul
- 42: Kühlfluidleitung
- 44: Kühlfluidleitung
- 46: Schieber
- 48: Druckknopf

## Patentansprüche

1. Vorrichtung zum Blasformen von Kunststoffbehältern, die eine öffenbare und verschließbare Blasform zur Umformung von temperierten Vorformlingen aus Kunststoff unter Einbringung eines Blasinnendrucks zu Kunststoffbehältern, welche Blasform mindestens zwei auswechselbar an einem Blasformträger (32, 18) angeordnete, schalenartige Blasformteile (34) mit jeweils darin verlaufenden Kühlfluidkanälen zur Führung von Kühlfluid und zur Temperierung der Blasform während und/oder nach erfolgtem Blasumformen des Kunststoffbehälters aufweist, wobei die Kühlfluidkanäle in der Blasform an eine zentrale Kühlfluidversorgung (16) der Blasformvorrichtung angeschlossen sind, und wobei zwischen der zentralen Kühlfluidversorgung (16) und den in den Blasformteilen (34) angeordneten Kühlfluidkanälen ein Kupplungsmodul (20, 40) vorgesehen ist, **dadurch gekennzeichnet, dass** das Kupplungsmodul (20, 40) eine fest fixierte Kupplungskassette mit beweglichen Elementen umfasst und räumlich und/oder baulich dem Blasformträger (32, 18) zugeordnet ist, wobei:
die Kassette zwei voneinander getrennte, jeweils verschiebbare und fest eingebundene Elemente beinhaltet,
- die Elemente über die Kassette eine Rastposition erfahren und mittels eines Druckknopfes als Betätigungselements wieder freigegeben werden,
- sich an den Enden der Elemente auf einer Seite ein Kupplungselement befindet, welches an ein entsprechendes Gegenelement herangeführt werden kann, und das gegenüber liegende Ende an die Versorgungsleitung für das Kühlfluid angebunden wird,
- die Elemente einen um 90° zur Verschieberichtung angeordneten Bolzen aufweisen, welcher als Betätigungsmittel zum Schieben verwendet wird,
- werden die verschiebbaren Elemente, die einer mechanischen Vorspannung unterliegen, in die Rastposition gebracht, ein Verbinden erfolgt und der Kühlmittelkreislauf dadurch geschlossen ist, und
- ein Trennen der Verbindung durch die Freigabe der Rastposition durch Drücken des Druckknopfes erreicht wird, wobei die Elemente durch die Vorspannung der Druckfeder automatisch in eine geöffnete Position geschoben werden, und der Kühlmittelkreislauf dadurch unterbrochen wird.

2. Vorrichtung nach Anspruch 1, bei der das Kupplungsmodul (20,40) in definierter Lage am Blasformträger (32, 18) fixiert ist.

3. Vorrichtung nach Anspruch 1 oder 2, bei der das Kupplungsmodul (20, 40) fest am Blasformträger (32, 18) montiert ist und lösbare Leitungsverbindungen (12, 36) zu den jeweiligen Blasformteilen (34) herstellt.

4. Vorrichtung nach einem der Ansprüche 1 bis 3, bei der das Kupplungsmodul (20,40) manuell betätigbare Trenneinrichtungen für die Kühlfluidleitungen (22, 24, 42, 44) aufweist.

5. Vorrichtung nach einem der Ansprüche 1 bis 4, bei der jedes der Kupplungsmodule (20, 40) über manuell betätigbare Betätigungselemente zur Zuführung und/oder Trennung der Kühlfluidleitungen (22, 24, 42, 44) vom jeweiligen Blasformteil (34, 14) verfügt.

6. Vorrichtung nach einem der Ansprüche 1 bis 4, bei der jedes der Kupplungsmodule (20, 40) über steuerbare Betätigungselemente zur Zuführung und/oder Trennung der Kühlfluidleitungen (22, 24, 42, 44) vom jeweiligen Blasformteil (34, 14) verfügt.

7. Vorrichtung nach Anspruch 5 oder 6, bei der jedes Betätigungselement eines der Kupplungsmodule (20, 40) jeweils mit zwei oder mehr parallelen Leitungsanschlüssen zusammenwirkt.

8. Verfahren zum Auswechseln von Blasformteilen einer öffenbaren und verschließbaren Blasform zum Herstellen von Kunststoffbehältern durch Umformung von temperierten Vorformlingen aus Kunststoff unter Einbringung eines Blasinnendrucks zu Kunststoffbehältern, wobei die Blasform mindestens zwei auswechselbar an einem Blasformträger (32, 18) angeordnete, schalenartige Blasformteile (34) mit jeweils darin verlaufenden Kühlfluidkanälen zur Führung von Kühlfluid und zur Temperierung der Blasform während und/oder nach erfolgtem Blasumformen des Kunststoffbehälters aufweist, wobei die Kühlfluidkanäle in der Blasform an eine zentrale Kühlfluidversorgung (16) der Blasformvorrichtung angeschlossen sind, **dadurch gekennzeichnet, dass** beim Trennen der Blasformteile (34, 14) vom Blasformträger (32, 18) und beim Auswechseln der Blasformteile (34, 14) eine zwischen der zentralen Kühlfluidversorgung (16) und den in den Blasformteilen (34, 14) angeordneten Kühlfluidkanälen befindliche Leitungsverbindung (12) mittels Betätigung eines dem Blasformträger (32, 18) zugeordneten Kupplungsmoduls (20, 40), das eine fest fixierte Kupplungskassette mit beweglichen Elementen umfasst, trennbar und/oder verbindbar ist, wobei:
die Kassette zwei voneinander getrennte, jeweils verschiebbare und fest eingebundene Elemente beinhaltet,
- die Elemente über die Kassette eine Rastposition erfahren und mittels eines Druckknopfes als Betätigungselements wieder freigegeben werden,
- sich an den Enden der Elemente auf einer Seite ein Kupplungselement befindet, welches an ein entsprechendes Gegenelement herangeführt werden kann, und das gegenüber liegende Ende an die Versorgungsleitung für das Kühlfluid angebunden wird,
- die Elemente einen um 90° zur Verschieberichtung angeordneten Bolzen aufweisen, welcher als Betätigungsmittel zum Schieben verwendet wird,
- werden die verschiebbaren Elemente, die einer mechanischen Vorspannung unterliegen, in die Rastposition gebracht, ein Verbinden erfolgt und der Kühlmittelkreislauf dadurch geschlossen ist, und
- ein Trennen der Verbindung durch die Freigabe der Rastposition durch Drücken des Druckknopfes erreicht wird, wobei die Elemente durch die Vorspannung der Druckfeder automatisch in eine geöffnete Position geschoben werden, und der Kühlmittelkreislauf dadurch unterbrochen wird.

## Claims

1. Device for blow molding plastic containers, comprising an openable and closable blow mold for the conversion of tempered plastic preforms, whereby an inner blow pressure is applied to the plastic containers, whereby the blow mold contains at least two shell like blow mold pieces (34) which are arranged interchangeably at a blow mold carrier (32, 18) and wherein each of the blow mold pieces (34) contains cooling fluid pipes as conducts for a cooling fluid extending therein to temper the blow mold during and / or after blow molding of the plastic containers, whereby the cooling fluid pipes in the blow mold are connected to a central cooling fluid supply (16) of the device for blow molding, and whereby a coupling module (20, 40) is arranged between the central cooling fluid supply (16) and the cooling fluid pipes extending in the blow mold pieces (34), **characterized in that** the coupling module (20, 40) comprises a firmly fixed coupling cassette with movable elements and is associated spatially and / or structurally with the blow mold carrier (32, 18), wherein:
- the coupling cassette comprises two elements which are separated from one another and which are respectively slidable and firmly integrated,
- via the coupling cassette, the elements will experience a latching position and are releasable again by means of a push button as an actuating element,
- a coupling element on one side at the ends of the elements can be brought up to a corresponding counter element and the opposite end of the elements can be connected to the supply line for the cooling fluid,
- the elements have a bolt arranged 90 ° relative to the displacement direction, which bolt is used as an actuating means for pushing,
- the displaceable elements, which are subjected to a mechanical prestress, are brought into the latching position, a connection is effected and the coolant circuit is thereby closed, and
- a disconnection of the connection is achieved by releasing the latching position by pressing the push button, whereby the elements are automatically pushed into an open position by the prestress of the pressure spring, and the coolant circuit is thereby interrupted.

2. Device according to claim 1, whereby the coupling module (20, 40) is fixed to the blow mold carrier (32, 18) in a defined position.

3. Device according to claim 1 or 2, whereby the coupling module (20, 40) is mounted tightly to the blow mold carrier (32, 18) and whereby the coupling module (20, 40) produces detachable connections (12, 36) to the respective blow mold pieces (34).

4. Device according to one of the claims 1 to 3, whereby the coupling module (20, 40) contains manually operable disconnecting devices for disconnecting the cooling fluid pipes (22, 24, 42, 44).

5. Device according to one of the claims 1 to 4, whereby each coupling module (20, 40) contains manually operable operating elements for the feeding and/or disconnection of the cooling fluid pipes (22, 24, 42, 44) from the respective blow mold piece (34, 14).

6. Device according to one of the claims 1 to 4, whereby each coupling module (20, 40) contains controllable operating elements for the feeding and/or disconnection of the cooling fluid pipes (22, 24, 42, 44) from the respective blow mold piece (34, 14).

7. Device according to one of the claims 5 or 6, whereby each operating element of one of the coupling modules (20, 40) interacts with two or more parallel pipe connections.

8. Method for interchanging blow form pieces of an openable and closable blow mold for the production of plastic containers by converting tempered plastic performs, whereby an inner blow pressure is applied to the plastic containers, whereby the blow mold contains at least two shell like blow mold pieces (34) which are arranged interchangeably at a blow mold carrier (32, 18) and wherein each of the blow mold pieces (34) contains cooling fluid pipes as conducts for a cooling fluid extending therein to temper the blow mold during and / or after blow molding of the plastic containers, whereby the cooling fluid pipes in the blow mold are connected to a central cooling fluid supply (16) of the device for blow molding, **characterized in that** during separation of the blow mold pieces (34, 14) from the blow mold carrier (32, 18) and during the exchange of the blow mold pieces (34, 14) a connection (12) which is located between the central cooling fluid supply (16) and the cooling fluid pipes extending in the blow mold pieces (34, 14) can be connected and / or disconnected by actuation of an coupling module (20,40) assigned to the blow mold carrier (32, 18), the coupling module (20,40) comprising a firmly fixed coupling cassette with movable elements, wherein:
- the coupling cassette comprises two elements which are separated from one another and which are respectively slidable and firmly integrated,
- via the coupling cassette, the elements will experience a latching position and are releasable again by means of a push button as an actuating element,
- a coupling element on one side at the ends of the elements can be brought up to a corresponding counter element and the opposite end of the elements can be connected to the supply line for the cooling fluid,
- the elements have a bolt arranged 90 ° relative to the displacement direction, which bolt is used as an actuating means for pushing,
- the displaceable elements, which are subjected to a mechanical prestress, are brought into the latching position, a connection is effected and the coolant circuit is thereby closed, and
- a disconnection of the connection is achieved by releasing the latching position by pressing the push button, whereby the elements are automatically pushed into an open position by the prestress of the pressure spring, and the coolant circuit is thereby interrupted.

## Revendications

1. Dispositif de moulage par soufflage de récipients en matière plastique qui comprend un moule de soufflage apte à être ouvert et fermé et destiné à transformer des préformes de matière plastique tempérées, en introduisant une pression intérieure de soufflage, en récipients en matière plastique, lequel moule de soufflage comprend au moins deux parties de moule de soufflage (34) de type cuvette qui sont disposées de manière échangeable sur un support de moule de soufflage (32, 18) et qui comprennent chacune des canaux de fluide de refroidissement s'étendant à l'intérieur de celles-ci et destinés à guider du fluide de refroidissement et à tempérer le moule de soufflage durant le formage par soufflage du récipient en matière plastique et/ou après que celui-ci a été mis en oeuvre, dans lequel les canaux de fluide de refroidissement dans le moule de soufflage sont raccordés à une alimentation en fluide de refroidissement (16) centrale du dispositif de moulage par soufflage, et dans lequel un module d'accouplement (20, 40) est prévu entre l'alimentation centrale en fluide de refroidissement (16) et les canaux de fluide de refroidissement disposés à l'intérieur des parties de moule de soufflage (34), **caractérisé par le fait que** ledit module d'accouplement (20, 40) comprend une cassette d'accouplement fixée solidement et comprenant des éléments mobiles, et est associé dans l'espace et/ou de manière constructive audit support de moule de soufflage (32, 18), dans lequel:
- ladite cassette inclut deux éléments séparés l'un de l'autre qui sont chacun déplaçables et installés à demeure,
- les éléments sont amenés dans une position d'arrêt par l'intermédiaire de la cassette et sont à nouveau libérés au moyen d'un bouton-poussoir en tant qu'élément d'actionnement,
- un élément d'accouplement est situé aux extrémités des éléments, sur un côté, qui peut être rapproché d'un contre-élément correspondant, et l'extrémité opposée est reliée à la conduite d'alimentation pour le fluide de refroidissement,
- les éléments présentent un boulon qui est disposé à 90° par rapport à la direction de déplacement et qui est utilisé en tant que moyen d'actionnement pour pousser,
- lorsque les éléments déplaçables qui sont soumis à une précontrainte mécanique sont amenés dans la position d'arrêt, une connexion a lieu et le circuit de fluide de refroidissement est ainsi fermé, et
- une coupure de la liaison est atteinte par la libération de la position d'arrêt en appuyant sur le bouton-poussoir, les éléments étant poussés automatiquement dans une position ouverte par la précontrainte du ressort de pression, et le circuit de fluide de refroidissement est ainsi interrompu.

2. Dispositif selon la revendication 1, dans lequel ledit module d'accouplement (20, 40) est fixé dans une position définie sur le support de moule de soufflage (32, 18).

3. Dispositif selon la revendication 1 ou 2, dans lequel le module d'accouplement (20, 40) est monté à demeure sur le support de moule de soufflage (32, 18) et établit des raccordements de conduite (12, 36) amovibles vers les parties de moule de soufflage (34) respectives.

4. Dispositif selon l'une quelconque des revendications 1 à 3, dans lequel le module d'accouplement (20, 40) comprend des dispositifs de déconnexion manuellement actionnables pour les conduites de fluide de refroidissement (22, 24, 42, 44).

5. Dispositif selon l'une quelconque des revendications 1 à 4, dans lequel chacun des modules d'accouplement (20, 40) dispose d'éléments d'actionnement manuellement actionnables destinés à amener et/ou à déconnecter les conduites de fluide de refroidissement (22, 24, 42, 44) de la partie de moule de soufflage (34, 14) respective.

6. Dispositif selon l'une quelconque des revendications 1 à 4, dans lequel chacun des modules d'accouplement (20, 40) dispose d'éléments d'actionnement commandables destinés à amener et/ou à déconnecter les conduites de fluide de refroidissement (22, 24, 42, 44) de la partie de moule de soufflage (34, 14) respective.

7. Dispositif selon la revendication 5 ou 6, dans lequel chaque élément d'actionnement de l'un des modules d'accouplement (20, 40) agit de concert respectivement avec deux ou plusieurs raccords de conduite parallèles.

8. Procédé pour échanger des parties de moule de soufflage d'un moule de soufflage apte à être ouvert et fermé et destiné à fabriquer des récipients en matière plastique par transformation de préformes de matière plastique tempérées, en introduisant une pression intérieure de soufflage, en récipients en matière plastique, dans lequel ledit moule de soufflage comprend au moins deux parties de moule de soufflage (34) de type cuvette qui sont disposées de manière échangeable sur un support de moule de soufflage (32, 18) et qui comprennent chacune des canaux de fluide de refroidissement s'étendant à l'intérieur de celles-ci et destinés à guider du fluide de refroidissement et à tempérer le moule de soufflage durant le formage par soufflage du récipient en matière plastique et/ou après que celui-ci a été mis en oeuvre, dans lequel les canaux de fluide de refroidissement dans le moule de soufflage sont raccordés à une alimentation en fluide de refroidissement (16) centrale du dispositif de moulage par soufflage, **caractérisé par le fait que,** lorsque les parties de moule de soufflage (34, 14) sont séparées du support de moule de soufflage (32, 18) et lorsque les parties de moule de soufflage (34, 14) sont échangées, un raccordement de conduite (12) situé entre l'alimentation centrale en fluide de refroidissement (16) et les canaux de fluide de refroidissement disposés à l'intérieur des parties de moule de soufflage (34, 14) peut être déconnecté et/ou connecté en actionnant un module d'accouplement (20, 40) qui est associé au support de moule de soufflage (32, 18) et qui comprend une cassette d'accouplement fixée solidement et ayant des éléments mobiles, dans lequel:
- ladite cassette inclut deux éléments séparés l'un de l'autre qui sont chacun déplaçables et installés à demeure,
- les éléments sont amenés dans une position d'arrêt par l'intermédiaire de la cassette et sont à nouveau libérés au moyen d'un bouton-poussoir en tant qu'élément d'actionnement,
- un élément d'accouplement est situé aux extrémités des éléments, sur un côté, qui peut être rapproché d'un contre-élément correspondant, et l'extrémité opposée est reliée à la conduite d'alimentation pour le fluide de refroidissement,
- les éléments présentent un boulon qui est disposé à 90° par rapport à la direction de déplacement et qui est utilisé en tant que moyen d'actionnement pour pousser,
- lorsque les éléments déplaçables qui sont soumis à une précontrainte mécanique sont amenés dans la position d'arrêt, une connexion a lieu et le circuit de fluide de refroidissement est ainsi fermé, et
- une coupure de la liaison est atteinte par la libération de la position d'arrêt en appuyant sur le bouton-poussoir, les éléments étant poussés automatiquement dans une position ouverte par la précontrainte du ressort de pression, et le circuit de fluide de refroidissement est ainsi interrompu.
